# EUROPÄISCHE PATENTSCHRIFT

(11) **EP 3 921 912 B1**
(45) Veröffentlichungstag und Bekanntmachung des Hinweises auf die Patenterteilung: **22.07.2026**
(21) Anmeldenummer: 20714890.9
(22) Anmeldetag: 13.03.2020
(51) Int. Cl.: H02J 1/00, H02H 7/26

(54) **SCHALTEINRICHTUNG FÜR EINEN GLEICHSPANNUNGSSTROMKREIS**
SWITCH DEVICE FOR A DC VOLTAGE CIRCUIT
DISPOSITIF DE COMMUTATION POUR UN CIRCUIT DE TENSION CONTINUE

(30) Priorität: 22.03.2019 DE 102019203982
(43) Veröffentlichungstag der Anmeldung: 15.12.2021
(73) Patentinhaber: Siemens Aktiengesellschaft, 80333 München (DE)
(72) Erfinder: BECKERT, Thomas, 90461 Nürnberg (DE); KÖLLENSPERGER, Peter, 90562 Heroldsberg (DE); NANNEN, Hauke, 90443 Nürnberg (DE); SCHIERLING, Hubert, 91052 Erlangen (DE); WÄGELE, Dieter, 90522 Oberasbach (DE)
(74) Vertreter: Siemens Patent Attorneys
(86) Internationale Anmeldenummer: PCT/EP2020/056751
(87) Internationale Veröffentlichungsnummer: WO 2020/193168

(56) Entgegenhaltungen:
- EP-A1- 2 701 255
- WO-A1-2011/057675
- WO-A1-2012/123015
- WO-A1-2013/068046
- WO-A1-2014/117813
- WO-A2-2012/123014
- CN-A- 106 711 930
- MASOOD HAJIAN ET AL: "Evaluation of Semiconductor Based Methods for Fault Isolation on High Voltage DC Grids", IEEE TRANSACTIONS ON SMART GRID, IEEE, USA, vol. 4, no. 2, 1 June 2013 (2013-06-01), pages 1171 - 1179, XP011510797, ISSN: 1949-3053, DOI: 10.1109/TSG.2013.2238260

## Beschreibung

Die Erfindung betrifft eine Schalteinrichtung zum Koppeln eines Gleichspannungsabzweiges an einen Gleichspannungsbus nach dem Oberbegriff von Patentanspruch 1 oder 2.

Eine Gleichspannungs-Schutzeinrichtung ist beispielsweise aus der CN108418192A bekannt.

Mit Gleichspannung sind Spannungen bis 1500 Volt gemeint.

Gleichspannungen bis zu dieser Höhe werden auch als Niederspannung bezeichnet. Mit Gleichspannung sind spezieller insbesondere Spannungen gemeint, die größer als die Kleinspannung mit 120 Volt Gleichspannung sind. Mit Gleichspannung sind insbesondere Spannungen von 400-800 Volt gemeint.

Mit Gleichspannungsstromkreis bzw. Gleichstromkreis sind Stromkreise für Ströme, insbesondere Nennströme bzw. maximal Ströme, von 2 bis 1000 bzw. 5000 Ampere; spezieller für Ströme von 2 Ampere bis 400 Ampere oder 200 Ampere gemeint.

Mit Gleichspannungsbus ist ein mindestens Zweileitersystem mit einem Plusleiter und einem Minusleiter gemeint, das von mindestens einer Energiequelle mit Gleichspannung versorgt wird. An den Gleichspannungsbus ist über jeweils einen Gleichspannungsabzweig ein Gleichspannungsgerät, z.B. ein Gleichspannungsverbraucher, Last, Wechselrichter, kombinierte Energiesenke oder Energiequelle, reine (weitere) Energiequelle, etc., angeschlossen. An einem Gleichspannungsabzweig können auch mehrere Gleichspannungsgeräte angeschlossen sein.

Mit Gleichspannungsgerät ist insbesondere ein Gerät mit einer Leistung von 1 Kilowatt bis 500 Kilowatt gemeint.

Mittlerweile werden verstärkt Gleichspannungsstromkreise, auch als Gleichspannungsnetze respektive Niederspannungsgleichstromnetze bezeichnet, entwickelt und aufgebaut, die üblicherweise einen Gleichspannungsbus mit Gleichspannungsabzweigen aufweisen.

Die Gleichspannungsabzweige, auch als Verbraucherabzweige bezeichnet, werden üblicherweise über einen Gleichspannungsschalter (DC Schalter) abgesichert, im Vorliegenden als Schalteinrichtung bezeichnet. Diese Schalteinrichtung verfügt über mindestens ein Schaltmodul, üblicherweise zwei Schaltmodule, mit mindestens einem steuerbaren Halbleiterschaltelement, auch als leistungselektronisches Schaltglied bezeichnet, dem eine Diode parallel geschaltet sein kann.

Die Funktion des steuerbaren Halbleiterschaltelements und der parallel geschalteten Diode kann auch physikalisch in einem Halbleiterbauelement realisiert sein. Ein solches Bauelement wird als rückwärtsleitfähig bezeichnet.

Ferner kann eine Schmelzsicherung vorhanden sein.

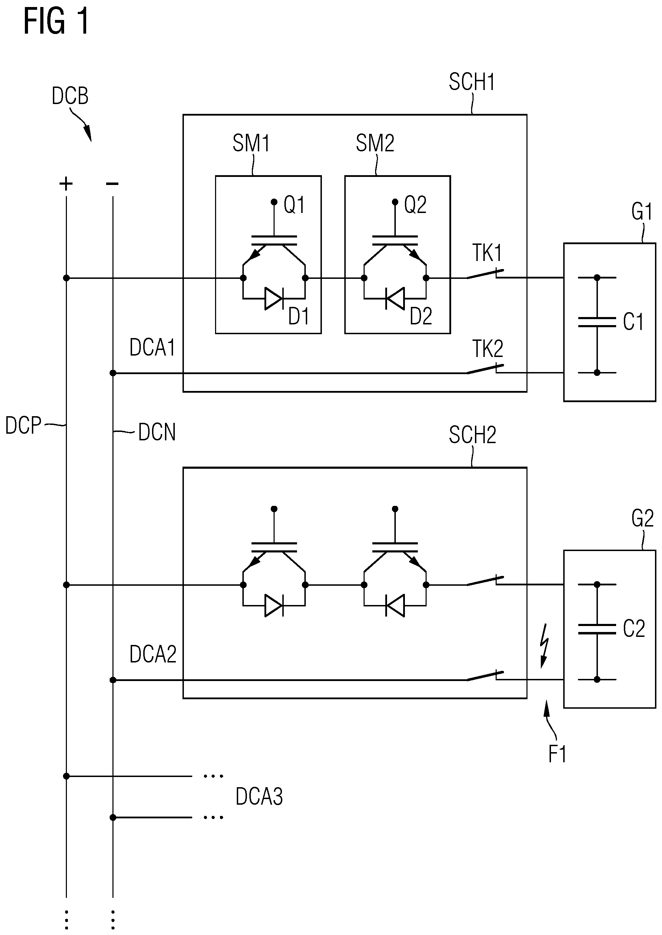

Eine Schalteinrichtung zum Koppeln eines Gleichspannungsabzweiges an einen Gleichspannungsbus gemäß dem Stand der Technik ist in Figur 1 gezeigt.

Figur 1 zeigt einen Gleichspannungsbus DCB, aufweisend einen Plusleiter DCP und einen Minusleiter DCN, die mit einer nicht dargestellten Gleichspannungs-Energiequelle verbunden sind, beispielsweise mit einer Gleichspannung von 600 Volt.

Am Gleichspannungsbus DCB sind ein erster Gleichspannungsabzweig DCA1, ein zweiter Gleichspannungsabzweig DCA2 und ein dritter Gleichspannungsabzweig DCA3 vorgesehen; es können weitere Gleichspannungsabzweige vorgesehen sein.

Der erste Gleichspannungsabzweig DCA1 ist über eine erste Schalteinrichtung SCH1 mit einem ersten Gerät G1 verbunden, ebenso ist der zweite Gleichspannungsabzweig DCA2 über eine zweite Schalteinrichtung SCH2 mit einem zweiten Gerät G2 verbunden.

Die erste Schalteinrichtung SCH1 weist eine Serienschaltung eines ersten und eines zweiten Schaltmoduls SM1, SM2 auf. Das erste Schaltmodul SM1 weist für eine erste Stromrichtung ein erstes steuerbares Halbleiterschaltelement Q1 und das zweite Schaltmodul SM2 für die entgegengesetzte Stromrichtung ein zweites steuerbares Halbleiterschaltelement Q2 auf.

Dem ersten Halbleiterschaltelement Q1 ist eine erste Diode D1, die in der entgegengesetzten Stromrichtung wie das erste Halbleiterschaltelement Q1 leitend ist, und dem zweiten Halbleiterschaltelement Q2 ist eine zweite Diode D2, die in der ersten Stromrichtung des ersten Halbleiterschaltelementes Q1 leitend ist, parallel geschaltet.

Die erste Schalteinrichtung SCH1 ist mit zweipoligen Anschlüssen ausgeführt (für Plus- und Minusleiter), im Beispiel befinden sich die ersten und zweiten Schaltmodule SM1, SM2 in einem Leiter, im Beispiel im Plusleiter des ersten Gleichspannungsabzweiges DCA1; der Minusleiter ist durchgeführt und weist keine Schaltmodule auf. Alternativ können die Schaltmodule SM1, SM2 auch im Minusleiter angeordnet sein bzw. beide Leiter können Schaltmodule aufweisen.

Der Serienschaltung der beiden Schaltmodule SM1, SM2 folgt geräteseitig bzw. gleichspannungsabzweigseitig ein Trennkontakt, wobei für den Plusleiter ein erster Trennkontakt TK1 und den Minusleiter ein zweiter Trennkontakt TK2 vorgesehen sind, allgemein als Trennkontakt bzw. Trennkontakte bezeichnet, zur galvanischen Trennung des Gerätes bzw. eines Verbrauchers.

In analoger Weise ist die zweite Schalteinrichtung SCH2 aufgebaut. Weitere Schalteinrichtungen können in analoger Weise aufgebaut sein.

Das Gerät G1, G2 ist üblicherweise ein Gleichspannungsgerät, das eine elektrische Kapazität aufweist. Im Beispiel weist das erste Gerät G1 die erste Kapazität C1, das zweite Gerät G2 die zweite Kapazität C2 auf. In den Kapazitäten der (Gleichspannungs-)Geräte sind häufig nicht unwesentliche Energiemengen gespeichert.

Tritt in dem Gleichspannungsstromkreis / Gleichspannungsnetz respektive DC-Netz gemäß Figur 1 ein Fehler auf, **z.B.** ein Kurzschluss an der Fehlerstelle F1, die sich zwischen zweiter Schalteinrichtung SCH2 und zweitem Gerät G2 befindet, so wird der dortige Kurzschluss aus den umliegenden Gleichspannungsabzweigen respektive DC-Abzweigen und den sich darin befindlichen Energiequellen bzw. Kapazitäten (der Geräte) gespeist. Dies führt zu einem hohen Strom in der zugehörigen Schalteinrichtung, im Beispiel der zweiten Schalteinrichtung SCH2, die mit einer Abschaltung auslöst.

Wichtig dabei ist, dass die anderen Schalteinrichtungen bzw. Schalter nicht auslösen, so dass ein so genanntes selektives Abschalten des Fehlers erfolgt.

Weiterhin sollen die anderen Schalteinrichtungen den Stromfluss aus dem jeweiligen Gleichspannungsabzweig bzw. Verbraucherabzweig zum Kurzschluss möglichst wenig behindern, damit die Schalteinrichtung, im Beispiel die zweite Schalteinrichtung SCH2, sicher auslöst. Deshalb ist in den Schalteinrichtungen ein abschaltbarer Halbleiter, wie **z.B.** ein Bipolartransistor mit isolierter Gate-Elektrode, kurz IGBT, eher hinderlich, da diese meist ein Entsättigungsverhalten aufweisen und strombegrenzend wirken. Ferner würden diese Halbleiterschalter sehr schnell abschalten, in der Regel im einstelligen µs Bereich.

Tritt an der Fehlerstelle F1 Kurzschluss auf, so wird die Energie der zweiten Kapazität C2 (respektive des zweiten Kondensators C2) des betroffenen zweiten Gerätes G2 in die Fehlerstelle entladen. Zusätzlich wird auch die Energie der ersten Kapazität C1 und einer möglicherweise (nicht dargestellten) dritten Kapazität C3 der nicht betroffenen ersten und dritten Gleichspannungsabzweige DCA1, DCA3 in die Fehlerstelle F1 entladen.

Die erste und dritte Kapazitäten C1, C3 können einen hohen (Fehler-)Strom liefern. Besitzt beispielsweise das erste Gerät G1 einen kleinen Nennstrom, so ist die erste Schalteinrichtung SCH1 dementsprechend klein bemessen und kann den Stromfluss unterbrechen, auch wenn der Fehler in einem anderen Abzweig aufgetreten ist bzw. ohne den anderen Abzweig bis zu dessen Abschaltung weiter zu speisen.

Ziel ist es, dass der Strom in Rückwärtsrichtung der Schalteinrichtung möglichst lange (ohne Sättigung) getragen werden kann.

Bislang wurde dieses Problem dadurch gelöst, dass die Schalteinrichtungen stark überdimensioniert wurden, was teuer bzw. nicht ökonomisch ist.

Aus der EP 2 701 255 A1 ist ein Schaltkreisunterbrechungsgerät bekannt. Ferner offenbart die WO 2012/123015 A1 DC-Netz und ein Verfahren zum Begrenzen des Effekts eines Fehlers im DC-Netz. Die WO 2011/057675 A1 offenbart ein Gerät und ein Verfahren, den Strom einer Leistungsübertragung oder eines Verteilungsnetzes zu unterbrechen und eine Strombegrenzungsanordnung.

Aufgabe der vorliegenden Erfindung ist es, eine Lösung für das genannte Problem anzugeben, insbesondere eine Selektivität des Auslösens von Schalteinrichtungen in Gleichspannungsabzweigen zu ermöglichen.

Dieses Problem wird durch eine Schalteinrichtung mit den Merkmalen des Patentanspruchs 1 oder 2 gelöst.

Erfindungsgemäß wird dies dadurch erreicht, dass der Serienschaltung oder Parallelschaltung zweier (elektronischer bzw. halbleiterbasierter) Schaltmodule ein überbrückendes Halbleiterschaltelement parallel geschaltet ist. Das überbrückende Halbleiterschaltelement dient dabei zum Führen des Stromes für einen Ausnahmefall, bei dem die Spannung auf dem Gleichspannungsabzweig höher als die Spannung auf dem Gleichspannungsbus ist, insbesondere wenn die Differenz der Spannungen einen Schwellwert der Spannung überschreitet.

Im Normalfall erfolgt ein Stromfluss im beispielsweise Plusleiter vom Gleichspannungsbus über die Schalteinrichtung bzw. den Gleichspannungsabzweig zum Gerät.

In einem Ausnahmefall erfolgt ein Stromfluss auf dem Plusleiter vom Gerät über die Schalteinrichtung zum Gleichspannungsbus, was auch als Rückwärtsrichtung bezeichnet wird.

In analoger Weise erfolgt auf dem Minusleiter im Normalfall ein Stromfluss vom Gerät über den Gleichspannungsabzweig, die Schalteinrichtung zum Gleichspannungsbus. Im Ausnahmefall erfolgt der Stromfluss über den Minusleiter vom Gleichspannungsbus über die Schalteinrichtung bzw. den Gleichspannungsabzweig zum Gerät, **d.h.** in Rückwärtsrichtung. Hierbei ist mit Ausnahmefall ein Stromfluss in Rückwärtsrichtung gemeint, der auch ein zulässiger Betriebsfall sein kann.

Durch ein überbrückendes Halbleiterschaltelement, was derart ausgelegt ist, dass es größere Ströme in einer Richtung tragen kann, ist es möglich, dass der Strom in Rückwärtsrichtung der Schalteinrichtung möglichst lange getragen werden kann, um eine Auslösung einer Schalteinrichtung in einem anderen Gleichspannungsabzweig zu ermöglichen. Das überbrückende Halbleiterschaltelement wird in einem solchen Fall aktiviert.

Vorteilhafte Ausgestaltungen der Erfindung sind in den Unteransprüchen angegeben.

Das überbrückende Halbleiterschaltelement ist ein Thyristor, der derart angeordnet ist, dass er leitend geschaltet werden kann, um beispielsweise einen Stromfluss im Plusleiter vom Gerät zum Gleichspannungsbus zu ermöglichen. In analoger Weise wäre ein Thyristor im Minusleiter angeordnet, falls die Schaltmodule im Minusleiter angeordnet wären.

Der Thyristor könnte leitend geschaltet werden, bei Stromfluss vom anodenseitigen Anschluss des Thyristors über die Schaltmodule zum kathodenseitigen Anschluss des Thyristors; und wäre entsprechend angeordnet.

Dies hat den besonderen Vorteil, dass eine besonders einfache und billige Lösung für das überbrückende Halbleiterschaltelement gegeben ist, die problemlos große Ströme, insbesondere in einer Richtung, führen kann.

Es ist ein Stromsensor vorgesehen, der die Höhe des Stromes und die Stromrichtung ermitteln kann. Ferner ist ein Spannungssensor vorgesehen, der insbesondere die Höhe der Spannung auf Seiten des Gleichspannungsbusses ermitteln kann.

Dies hat den besonderen Vorteil, dass eine integrierte und kompakte Lösung für eine Schalteinrichtung gegeben ist, die ohne externe Sensoren auskommt.

Es ist eine Steuereinrichtung vorgesehen, die mit einem Steueranschluss des ersten und zweiten bzw. dritten und vierten Halbleiterschaltelementes sowie dem überbrückenden Halbleiterschaltelement, insbesondere dem jeweiligen Gate-Anschluss, dem Spannungssensor und dem Stromsensor verbunden ist und die derart ausgestaltet ist, dass bei Unterschreitung eines ersten Schwellwertes der Spannung und bei Stromfluss des Ausnahmefalles, d.h. im Falle eines Thyristors bei Stromfluss vom anodenseitigen Anschluss des Thyristors über die Schaltmodule zum kathodenseitigen Anschluss des Thyristors, das überbrückende Halbleiterschaltelement bzw. der Thyristor leitend geschaltet wird.

Dies hat den besonderen Vorteil, dass eine kompakte Lösung mit integrierter Steuerung für eine Schalteinrichtung gegeben ist.

In einer vorteilhaften Ausgestaltung der Erfindung ist das erste oder/und zweite bzw. dritte oder/und vierte Halbleiterschaltelement ein Bipolartransistor mit isolierter Gate-Elektrode, ein Metall-Oxid-Halbleiter-Feldeffekttransistor, ein Galliumnitrid-Transistor oder Silicon-Carbide-Transistor, kurz SiC Transistor, ist.

Dies hat den besonderen Vorteil, dass eine einfache Lösung für die Halbleiterschaltelemente der Schaltmodule gegeben ist.

In einer vorteilhaften Ausgestaltung der Erfindung ist der Serienschaltung bzw. der Parallelschaltung der beiden Schaltmodule gleichspannungsabzweigseitig ein Trennkontakt in Serie geschaltet.

Dies hat den besonderen Vorteil, dass eine galvanische Trennung des Gleichspannungsabzweiges ermöglicht wird.

In einer vorteilhaften Ausgestaltung der Erfindung weist die Parallelschaltung des überbrückenden Halbleiterschaltelementes eine Unterbrechungseinrichtung, insbesondere einen Relaiskontakt, insbesondere ein Öffner, auf.

Dies hat den besonderen Vorteil, dass im Falle eines Thyristors oder ähnlichem Halbleiterschaltelementes eine Rückstellung bzw. Rücksetzung des Stromflusses ermöglicht wird.

In einer vorteilhaften Ausgestaltung der Erfindung ist der Trennkontakt oder die Unterbrechungseinrichtung durch die Steuereinrichtung betätigbar, so dass der Stromfluss durch das überbrückende Halbleiterschaltelement, insbesondere den Thyristor, zurücksetzbar ist bzw. zurückgesetzt werden kann. Dies hat den besonderen Vorteil, dass eine gesteuerte Rücksetzung des Stromflusses durch den insbesondere Thyristor mittels der Steuereinrichtung ermöglicht wird, insbesondere wenn eine weitere Speisung des Gleichspannungsbusses durch den Gleichspannungsabzweig unterbleiben soll.

In einer vorteilhaften Ausgestaltung der Erfindung beträgt der erste Schwellwert der Spannung zwischen 10% bis 50% einer Nennspannung des Gleichspannungsbusses, insbesondere ist er 30% der Nennspannung des Gleichspannungsbusses.

Alternativ kann mit einem zweiten Spannungssensor eine Differenz zwischen Höhe der Spannung des Gleichspannungsbusses und Höhe der Spannung des Gleichspannungsabzweiges ermittelt werden, die mit einem Spannungsschwellwert bzw. Schwellwert der Spannung verglichen wird.

Dies hat den besonderen Vorteil eines einfachen Kriteriums für den Schwellwert der Spannung.

In einer vorteilhaften Ausgestaltung der Erfindung ist der Stromsensor ein Sensor auf Basis des Hall-Effektes.

Dies hat den besonderen Vorteil, dass eine einfache Lösung für die Ermittlung der Höhe und der Richtung des Stromes gegeben ist.

In einer vorteilhaften Ausgestaltung der Erfindung sind bei der Serienschaltung des ersten und zweiten Schaltmoduls die Emitter oder Kollektoren bzw. Sources oder Drains der ersten und zweiten Halbleiterschaltelemente in Form von Transistoren miteinander verbunden. Die Anode der parallelen Diode ist mit dem Emitter bzw. Source und die Kathode der parallelen Diode mit dem Kollektor bzw. Drain verbunden.

Dies hat den besonderen Vorteil, dass eine einfache Realisierung eines Schaltmoduls für die Erfindung gegeben ist.

In einer vorteilhaften Ausgestaltung der Erfindung ist die Steuereinrichtung derart ausgestaltet, dass bei Überschreitung eines ersten Schwellwertes des Stromes, insbesondere im Normalfall, eine Unterbrechung des Stromflusses durch mindestens ein Schaltmodul, insbesondere beide Schaltmodule, erfolgt.

Dies hat den besonderen Vorteil, dass die Steuereinrichtung sowohl eine Überstromschutzfunktion als auch eine erfindungsgemäße Funktion bereitstellt.

Alle Ausgestaltungen, sowohl in abhängiger Form rückbezogen auf den Patentanspruch 1 oder 2 als auch rückbezogen lediglich auf einzelne Merkmale oder Merkmalskombinationen von Patentansprüchen, bewirken eine Verbesserung einer Schalteinrichtung zur Verbesserung der Selektivität in einem Gleichspannungsnetz. Dadurch können insbesondere Geräte unterschiedlicher Leistungsklassen an einem gemeinsamen Gleichspannungsbus betrieben werden.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

In der zugehörigen Zeichnung zeigt:
Figur 1 eine Prinzipdarstellung eines Gleichspannungsabzweiges mit einer Schalteinrichtung an einem Gleichspannungsbus gemäß dem Stand der Technik,
Figur 2 eine Prinzipdarstellung eines Gleichspannungsabzweiges mit einer Schalteinrichtung an einem Gleichspannungsbus gemäß der Erfindung,
Figur 3 eine erste schematische Darstellung der Erfindung,
Figur 4 eine zweite schematische Darstellung der Erfindung,
Figur 5 ein Teil einer weiteren Schalteinrichtung,
Figur 6 eine weitere erfindungsgemäße Schalteinrichtung.

Figur 1 zeigt eine Prinzipdarstellung eines Gleichspannungsabzweiges mit einer Schalteinrichtung an einem Gleichspannungsbus gemäß dem Stand der Technik, wie sie bereits eingangs beschrieben wurde.

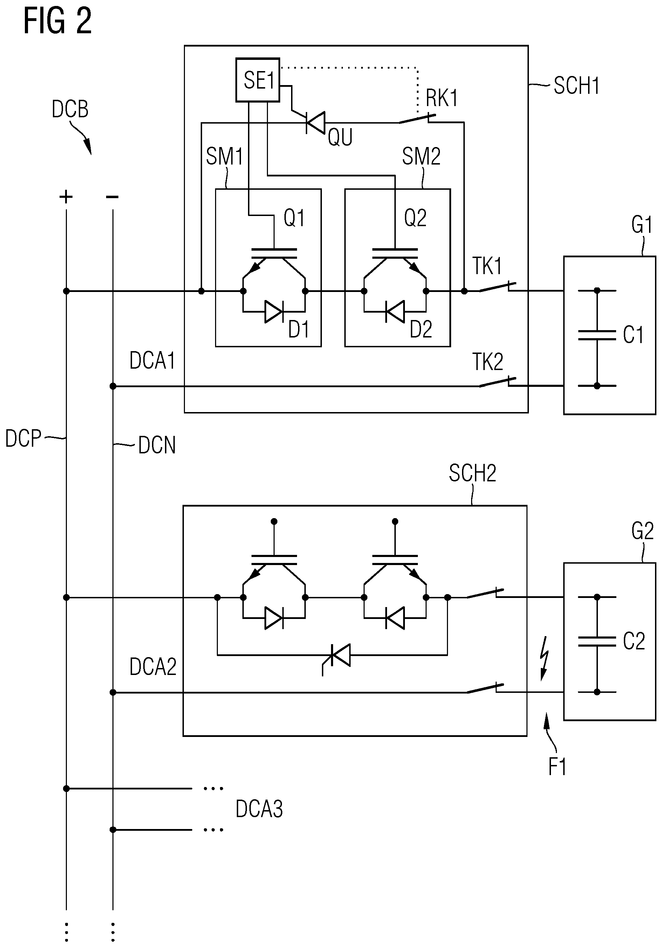

Figur 2 zeigt eine Prinzipdarstellung gemäß Figur 1, mit dem Unterschied, dass erfindungsgemäß der Serienschaltung des ersten und des zweiten Schaltmodul SM1, SM2 ein überbrückendes Halbleiterschaltelement QU, im Beispiel gemäß Figur 2 ein Thyristor, parallel geschaltet ist. Dabei ist im Plusleiter des ersten Gleichspannungsabzweiges DCA1 die Serienschaltung der beiden Schaltmodule angeordnet. Der Thyristor ist mit seiner Katode mit dem Gleichspannungsbus-seitigen Anschluss der Serienschaltung der Schaltmodule, die zudem den Gleichspannungsbus-seitigen Anschluss der Schalteinrichtung bilden, verbunden und mit seiner Anode mit dem geräte-seitigen Anschluss der Serienschaltung der Schaltmodule verbunden.

Das erste oder/und zweite Halbleiterschaltelement Q1, Q2 sind im Beispiel ein Bipolartransistor mit isolierter Gate-Elektrode, kurz IGBT. Es kann aber auch ein Metall-Oxid-Halbleiter-Feldeffekttransistor oder ein Galliumnitrid-Transistor sein.

Ferner ist mindestens ein nicht dargestellter Stromsensor vorgesehen, der die Höhe des Stromes und die Stromrichtung im Gleichspannungsabzweig ermitteln kann. Des Weiteren ist mindestens ein nicht dargestellter Spannungssensor vorgesehen, der insbesondere die Höhe der Spannung im Gleichspannungsabzweig auf Seiten des Gleichspannungsbusses ermitteln kann.

Es ist eine Steuereinrichtung SE1 vorgesehen, die mit einem Steueranschluss des ersten, zweiten und überbrückenden Halbleiterschaltelementes Q1, Q2, QU, insbesondere dem Gate-Anschluss, verbunden ist. Weiterhin ist die Steuereinrichtung SE1 mit dem (nicht dargestellten) Spannungssensor und dem (nicht dargestellten) Stromsensor verbunden.

Die Steuereinrichtung SE1 ist derart ausgestaltet, dass bei Unterschreitung eines ersten Schwellwertes der Spannung und bei Stromfluss vom anodenseitigen Anschluss des Thyristors über die Schaltmodule zum kathodenseitigen Anschluss des Thyristors der Thyristor leitend geschaltet wird.

Der Serienschaltung der beiden Schaltmodule SM1, SM2 ist gleichspannungsabzweigseitig, **d.h.** auf Seiten des ersten Gerätes G1, ein Trennkontakt in Serie geschaltet. Im Beispiel weisen beide Leiter des Gleichspannungsabzweiges, d.h. der Plus- und der Minusleiter, einen Trennkontakt TK1, TK2 auf. Der Trennkontakt weist insbesondere eine Trennfunktion gemäß Norm auf, d.h. eine sichere galvanische Trennung mit normgemäßen Abstands- oder/und Kriech- bzw. Luftstrecken ist gegeben.

Der Trennkontakt TK1, TK2 kann als Relaiskontakt, der durch die Steuereinrichtung SE1 betätigt wird, ausgeführt sein.

Die Parallelschaltung des überbrückenden Halbleiterschaltelementes QU, im Beispiel des Thyristors, weist eine Unterbrechungseinrichtung RK1 auf, insbesondere einen Relaiskontakt, der im Beispiel als Öffner ausgestaltet ist.

Die Parallelschaltung des überbrückenden Halbleiterschaltelementes QU ist insbesondere nur den Schaltmodulen parallel geschaltet. Der erste oder/und zweite Trennkontakt TK1, TK2 wird von der Parallelschaltung nicht erfasst, wie in Figur 2 dargestellt.

Der erste und zweite Trennkontakt TK1, TK2 oder die Unterbrechungseinrichtung RK1 können durch die Steuereinrichtung SE1 betätigbar sein, so dass der Stromfluss durch das überbrückende Halbleiterschaltelement, insbesondere den Thyristor QU, zurückgesetzt werden kann.

Die ersten und zweiten Schaltmodule SM1, SM2 der Serienschaltung können derart ausgestaltet sein, dass je nach verwendetem Halbleiterschaltelement die Emitter oder Kollektoren bzw. die Sources oder Drains der ersten und zweiten Halbleiterschaltelemente Q1, Q2 miteinander verbunden sind. Im Beispiel gemäß Figur 2 sind die Kollektoren der IGBT miteinander verbunden. Die Emitter bilden jeweilige Außenanschlüsse der Serienschaltung der Schaltmodule SM1, SM2, wobei ein erster Außenanschluss mit dem Gleichspannungsbus, ggfs. über eine Schmelzsicherung, der zweite Außenanschluss mit dem Gerät, ggfs. über einen Trennkontakt TK1, TK2, verbunden ist.

Die Anode der parallelen Diode ist mit dem Emitter bzw. Source und die Kathode der parallelen Diode mit dem Kollektor bzw. Drain verbunden, wie dargestellt.

Die Steuereinrichtung ist ferner derart ausgestaltet, dass bei Überschreitung eines ersten Schwellwertes des Stromes, insbesondere bei Stromfluss im Normalfall (entgegen dem Ausnahmefall), eine Unterbrechung des Stromflusses durch mindestens ein Schaltmodul, insbesondere beide Schaltmodule, erfolgt.

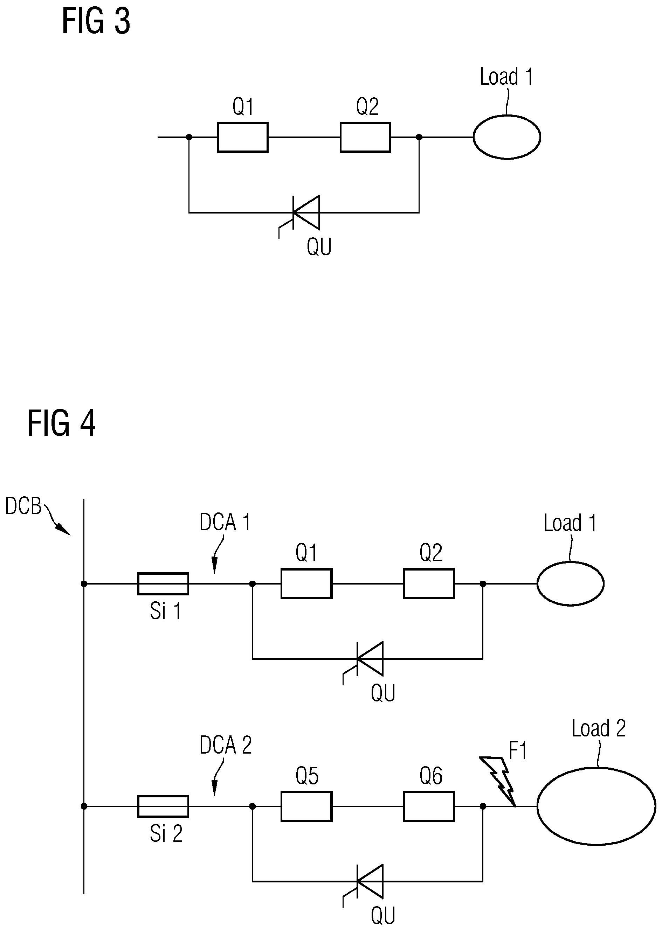

Figur 3 zeigt eine schematische Darstellung der Erfindung, mit dem ersten Halbleiterschaltelement Q1, dem zweiten Halbleiterschaltelement Q2 und einem ersten Gerät bzw. Verbraucher Load1.

Der Serienschaltung des ersten und zweiten Halbleiterschaltelementes Q1, Q2 ist ein überbrückendes Halbleiterschaltelement QU in Form eines Thyristors parallel geschaltet.

Figur 4 zeigt eine schematische Darstellung gemäß Figur 3, mit dem Unterschied, dass die erste Serienschaltung der ersten und zweiten Halbleiterschaltelementes Q1, Q2 über eine erste Schmelzsicherung Si1 an den Gleichspannungsbus DCB angeschlossen ist, an dem eine zweite Serienschaltung über eine zweite Schmelzsicherung Si2 in analoger Weise mit fünften und sechsten Halbleiterschaltelementen Q5, Q6, denen ein zweites überbrückendes Halbleiterschaltelement QU in Form eines Thyristors parallel geschaltet ist, angeschlossen ist, an dem ein zweites Gerät bzw. Verbraucher Load2 angeschlossen ist.

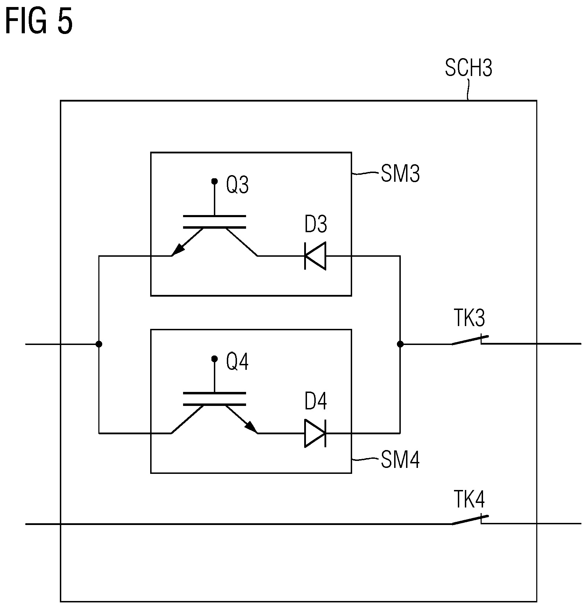

Figur 5 zeigt eine dritte Schalteinrichtung SCH3 zum Koppeln eines Gleichspannungsabzweiges an einen Gleichspannungsbus gemäß Figur 1 bzw. Figur 2, mit dem Unterschied, dass die dritte Schalteinrichtung SCH3 eine Parallelschaltung eines dritten SM3 und eines vierten Schaltmoduls SM4 aufweist, wobei das dritte Schaltmodul SM3 für die erste Stromrichtung eine Serienschaltung eines dritten steuerbaren Halbleiterschaltelement Q3 und einer dritten Diode D3
und das vierte Schaltmodul SM4 für die entgegengesetzte Stromrichtung eine Serienschaltung eines vierten steuerbaren Halbleiterschaltelement Q4 und einer vierten Diode D4 aufweist, wobei die dritte Diode D3 in der entgegengesetzten Stromrichtung sperrend ist und die vierte Diode D4 in der ersten Stromrichtung sperrend ist.

Die Funktion des steuerbaren Halbleiterschaltelements (Q3, Q4) und der in Serie geschalteten Diode (D3, D4) kann auch physikalisch in einem Halbleiterbauelement realisiert sein. Ein solches Bauelement wird als rückwärtssperrfähig bezeichnet.

Die Parallelschaltung ist im Beispiel im Plusleiter angeordnet. Sie weist einen dritten Trennkontakt TK3 im Plusleiter und einen vierten Trennkontakt TK4 im Minusleiter auf.

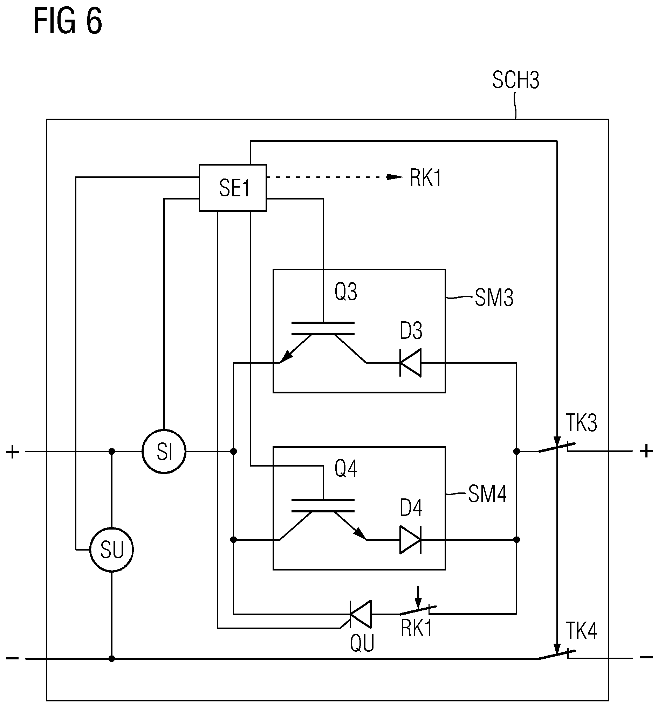

Figur 6 zeigt eine Anordnung gemäß Figur 5, mit dem Unterschied, dass der Parallelschaltung des dritten und vierten Schaltmoduls SM3, SM4 ein überbrückendes Halbleiterschaltelement QU parallel geschaltet ist.

Ferner ist ein Stromsensor SI, beispielsweise im Plusleiter, vorgesehen. Weiterhin ist ein Spannungssensor SU vorgesehen, der mit Plus- und Minusleiter verbunden ist, und insbesondere auf Seiten des Gleichspannungsbusses DCB angeordnet ist, um die Höhe der Spannung auf Seiten des Gleichspannungsbusses DCB zu ermitteln.

Der Strom- und der Spannungssensor SI, SU sind mit einer Steuereinrichtung gemäß Figur 2 verbunden. Diese ist wiederum mit dem dritten und vierten Schaltmodul SM3, SM4, insbesondere dessen Steueranschluss, insbesondere dem Gate-Anschluss des dritten und vierten Halbleiterschaltelements Q3, Q4, bevorzugt ein Bipolartransistor mit isolierter Gate-Elektrode o.ä., verbunden.

Die Steuereinrichtung SE1 ist mit dem Steueranschluss des überbrückenden Halbleiterschaltelementes QU, insbesondere dem Gate-Anschluss des Thyristors, verbunden.

Die Parallelschaltung des überbrückenden Halbleiterschaltelementes QU, insbesondere des Thyristors, weist eine Unterbrechungseinrichtung RK1 auf, die insbesondere mit der Schalteinrichtung SE1 verbunden ist.

Die dritten und vierten Trennkontakte TK3, TK4 können in einer Ausgestaltung mit dem Steuereinrichtung SE1 verbunden sein, wie in Figur 6 dargestellt.

Auf Seiten des Gleichspannungsabzweiges, d.h. geräteseitig, kann ein weiterer Gleichspannungssensor, zur Ermittlung der Höhe der Spannung auf Seiten des Gerätes, d.h. gleichspannungsabzweigseitig, vorgesehen sein. Dieser kann mit der Steuereinrichtung SE1 verbunden sein.

An Stelle der ersten und zweiten Schalteinrichtung SCH1, SCH2 kann eine Schalteinrichtung gemäß Figur 6 eingesetzt sein. Ferner können Gleichspannungsabzweige mit der ersten, zweiten bzw. dritten Schalteinrichtung SCH1, SCH2, SCH3 vorgesehen sein.

Im Folgenden wird die Erfindung nochmals kurz erläutert.

Eine elektronische bidirektionale Schalteinrichtung mit Halbleiterschaltern mit Freilaufdiode ist für den Betriebsstrom ausgelegt und kann im Kurzschlussfall einen Sättigungsstrom nur für kurze Zeit, im µs-Bereich, tragen.

Eine selektive Abschaltung eines fehlerhaften Abzweiges wird dann erschwert, wenn rückspeisende Ströme aus anderen Abzweigen abgeschaltet werden. Ziel soll sein, den Strom in Rückwärtsrichtung aus einem Abzweig möglichst lange ohne Sättigung zu tragen.

Hierfür wäre eine Überdimensionierung der Schalteinrichtung notwendig. Dies stellt eine teure Lösung dar.

Erfindungsgemäß wird ein weiteres Halbleiterschaltelement, insbesondere vorteilhaft ein Thyristor vorgesehen, um eine Schnellentladung des Abzweiges über den Gleichspannungsbus in den fehlerbehafteten Gleichspannungsabzweig zu ermöglichen.

Parallel zu der Serienschaltung bzw. Parallelschaltung der Schaltmodule bzw. Halbleiterschaltelemente bzw. Halbleiterschalter wird "in Rückwärtsrichtung" ein überbrückender Thyristor QU als Bypass eingesetzt. Dieser wird bei Unterschreiten eines Spannungsgrenzwertes auf dem Gleichspannungsbus (beispielsweise 30% der Nennspannung des Gleichspannungsbusses) und (großem) Strom vom Gerät über den Plusleiter des Gleichspannungsabzweiges in den Gleichspannungsbus, also in Rückwärtsrichtung, leitend geschaltet bzw. gezündet.

Die Schaltmodule SM1, SM2 bzw. SM3, SM4 bzw. Halbleiterschaltelemente Q1, Q2 / Q3, Q4 müssen so nicht den vollen (Kurzschluss-)Strom in Rückwärtsrichtung führen, dies übernimmt der überbrückende (Bypass-)Thyristor QU. Dieser Thyristor führt den (hohen) (Kurzschluss-)Strom, der damit den fehlerbehaften Gleichspannungsabzweig genügend Energie zur Abschaltung zur Verfügung stellt.

Nach Beseitigung des Fehlers (Kurzschlusses) wird die Schalteinrichtung zurückgesetzt. Insbesondere wird der überbrückende Thyristor QU gesperrt. Dies geschieht entweder zwangsläufig, wenn nach Beseitigung des Kurzschlusses die gleichspannungsbusseitige Spannung größer als die gleichspannungsabzweigseitige Spannung wird, oder es kann durch Öffnen einer Unterbrechungseinrichtung / Relaiskontaktes RK1 im Leitungszweig des Thyristors bzw. durch Öffnen der Trennkontakte TK1, TK2 bzw. TK3, TK4 erfolgen.

Damit ist die Schalteinrichtung SCH1, SCH3 wieder einschaltbereit.

Mit der Erfindung lässt sich eine verbesserte Selektivität in einer Gleichspannungsverteilung bzw. einem Gleichspannungsnetz mit mehreren Abzweigen und verteilten Kapazitäten realisieren. Damit wird die Schalteinrichtung des fehlerbehafteten Abzweiges für eine Abschaltung ertüchtigt.

Der überbrückende (Zusatz-)Thyristor QU wird im Anwendungsfall dann geschaltet, wenn zurückfließende (Kurzschluss-) Ströme aus dem angeschlossenen Gerät bzw. dessen Kapazität entstehen.

Mit der Erfindung können die Schaltmodule SM1, SM2, SM3, SM4 bzw. Halbleiterschaltelemente Q1, Q2, Q3, Q4 kleiner dimensioniert werden, mit dem Thyristor ist ein robuster Gesamtaufbau möglich.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schalteinrichtung (SCH1, SCH2) zum Koppeln eines Gleichspannungsabzweiges (DCA1, DCA2, DCA3) an einen Gleichspannungsbus (DCB),
wobei die Schalteinrichtung (SCH1, SCH2) eine Serienschaltung eines ersten (SM1) und eines zweiten Schaltmoduls (SM2) aufweist,
wobei das erste Schaltmodul (SM1) für eine erste Stromrichtung ein erstes steuerbares Halbleiterschaltelement (Q1) und das zweite Schaltmodul (SM2) für die entgegengesetzte Stromrichtung ein zweites steuerbares Halbleiterschaltelement (Q2) aufweist,
wobei dem ersten Halbleiterschaltelement (Q1) eine erste Diode (D1), die in der entgegengesetzten Stromrichtung leitend ist, und dem zweiten Halbleiterschaltelement (Q2) eine zweite Diode (D2), die in der ersten Stromrichtung leitend ist, parallel geschaltet ist,
wobei der Serienschaltung der beiden Schaltmodule (SM1, SM2) ein überbrückendes Halbleiterschaltelement (QU) parallel geschaltet ist,
**dadurch gekennzeichnet,**
**dass** das überbrückende Halbleiterschaltelement (QU) ein Thyristor ist, der derart angeordnet ist, dass er leitend geschaltet werden kann, wenn für einen Ausnahmefall die Spannung auf dem Gleichspannungsabzweig höher als die Spannung auf dem Gleichspannungsbus ist, um einen Stromfluss vom Gleichspannungsabzweig zum Gleichspannungsbus zu unterstützen, wobei ein Stromsensor vorgesehen ist, der die Höhe des Stromes und die Stromrichtung ermitteln kann und wobei ein Spannungssensor vorgesehen ist, der die Höhe der Spannung auf Seiten des Gleichspannungsbusses ermitteln kann, wobei eine Steuereinrichtung (SE1) vorgesehen ist, die mit einem Steueranschluss des ersten (Q1) und zweiten (Q2) sowie des überbrückenden Halbleiterschaltelementes (QU), und zwar dem Gate-Anschluss, dem Spannungssensor und dem Stromsensor verbunden ist und die derart ausgestaltet ist,
**dass** bei Unterschreitung eines ersten Schwellwertes der Spannung und bei Stromfluss des Ausnahmefalles der Thyristor leitend geschaltet wird.

2. Schalteinrichtung (SCH3) zum Koppeln eines Gleichspannungsabzweiges (DCA1, DCA2, DCA3) an einen Gleichspannungsbus (DCB),
wobei die Schalteinrichtung (SCH3) eine Parallelschaltung eines dritten (SM3) und eines vierten Schaltmoduls (SM4) aufweist,
wobei das dritte Schaltmodul (SM3) für die erste Stromrichtung eine Serienschaltung eines dritten steuerbaren Halbleiterschaltelement (Q3) und einer dritten Diode (D3) und das vierte Schaltmodul (SM4) für die entgegengesetzte Stromrichtung eine Serienschaltung eines vierten steuerbaren Halbleiterschaltelementes (Q4) und einer vierten Diode (D4) aufweist,
wobei die dritte Diode (D3) in der entgegengesetzten Stromrichtung sperrend ist und die vierte Diode (D4) in der ersten Stromrichtung sperrend ist,
wobei der Parallelschaltung des dritten und vierten Schaltmoduls (SM3, SM4) ein überbrückendes Halbleiterschaltelement (QU) parallel geschaltet ist,
**dadurch gekennzeichnet,**
**dass** das überbrückende Halbleiterschaltelement (QU) ein Thyristor ist, der derart angeordnet ist, dass er leitend geschaltet werden kann, wenn für einen Ausnahmefall die Spannung auf dem Gleichspannungsabzweig höher als die Spannung auf dem Gleichspannungsbus ist, um einen Stromfluss vom Gleichspannungsabzweig zum Gleichspannungsbus zu unterstützen, wobei ein Stromsensor vorgesehen ist, der die Höhe des Stromes und die Stromrichtung ermitteln kann und wobei ein Spannungssensor vorgesehen ist, der die Höhe der Spannung auf Seiten des Gleichspannungsbusses ermitteln kann, wobei eine Steuereinrichtung (SE1) vorgesehen ist, die mit einem Steueranschluss des dritten (Q3) und vierten (Q4) sowie des überbrückenden Halbleiterschaltelementes (QU), und zwar dem Gate-Anschluss, dem Spannungssensor und dem Stromsensor verbunden ist und die derart ausgestaltet ist, dass bei Unterschreitung eines ersten Schwellwertes der Spannung und bei Stromfluss des Ausnahmefalles der Thyristor leitend geschaltet wird.

3. Schalteinrichtung (SCH1, SCH2) nach Patentanspruch 1 oder 2,
**dadurch gekennzeichnet,**
**dass** das erste oder/und zweite bzw. dritte oder/und vierte Halbleiterschaltelement (Q1, Q2, Q3, Q4) ein Bipolartransistor mit isolierter Gate-Elektrode, ein Metall-Oxid-Halbleiter-Feldeffekttransistor, Galliumnitrid-Transistor oder Silicon-Carbide-Transistor ist.

4. Schalteinrichtung (SCH1, SCH2) nach einem der vorhergehenden Patentansprüche,
**dadurch gekennzeichnet,**
**dass** der Serienschaltung des ersten (SM1) und zweiten (SM2) bzw. der Parallelschaltung des dritten (SM3) und vierten (SM4) Schaltmoduls, insbesondere gleichspannungsabzweigseitig, ein Trennkontakt (TK1, TK3) in Serie geschaltet ist.

5. Schalteinrichtung (SCH1, SCH2) nach einem der vorhergehenden Patentansprüche,
**dadurch gekennzeichnet,**
**dass** die Parallelschaltung des überbrückenden Halbleiterschaltelementes (QU) eine Unterbrechungseinrichtung (RK1), insbesondere einen Relaiskontakt, insbesondere einen Öffner, aufweist.

6. Schalteinrichtung (SCH1, SCH2) nach Patentanspruch 4 oder 5,
**dadurch gekennzeichnet,**
**dass** der Trennkontakt (TK1, TK3) oder die Unterbrechungseinrichtung (RK1) durch die Steuereinrichtung (SE1) betätigbar ist, so dass der Stromfluss durch das überbrückende Halbleiterschaltelement (QU), insbesondere den Thyristor, zurücksetzbar ist.

7. Schalteinrichtung (SCH1, SCH2) nach einem der vorhergehenden Patentansprüche,
**dadurch gekennzeichnet,**
**dass** der erste Schwellwert der Spannung zwischen 10% bis 50% einer Nennspannung des Gleichspannungsbusses beträgt, insbesondere 30% der Nennspannung des Gleichspannungsbusses ist.

8. Schalteinrichtung (SCH1, SCH2) nach einem der vorhergehenden Patentansprüche,
**dadurch gekennzeichnet,**
**dass** der Stromsensor ein Sensor auf Basis des Hall-Effektes ist.

9. Schalteinrichtung (SCH1, SCH2) nach einem der vorhergehenden Patentansprüche,
**dadurch gekennzeichnet,**
**dass** bei der Serienschaltung des ersten und zweiten Schaltmoduls (SM1, SM2) die Emitter oder Kollektoren bzw. Sources oder Drains der ersten und zweiten Halbleiterschaltelemente in Form von Transistoren (Q1, Q2) miteinander verbunden sind; dass die Anode der parallelen Diode mit dem Emitter bzw. Source und die Katode der parallelen Diode mit dem Kollektor bzw. Drain verbunden ist.

10. Schalteinrichtung (SCH1, SCH2) nach einem der vorhergehenden Patentansprüche,
**dadurch gekennzeichnet,**
**dass** die Steuereinrichtung (SE1) derart ausgestaltet ist, dass bei Überschreitung eines ersten Schwellwertes des Stromes, insbesondere bei Stromfluss entgegen dem Ausnahmefall, eine Unterbrechung des Stromflusses durch mindestens ein Schaltmodul, insbesondere beide Schaltmodule, erfolgt.

## Claims

1. Switching device (SCH1, SCH2) for coupling a DC voltage branch (DCA1, DCA2, DCA3) to a DC voltage bus (DCB),
wherein the switching device (SCH1, SCH2) has a series circuit comprising a first switching module (SM1) and a second switching module (SM2),
wherein the first switching module (SM1) has a first controllable semiconductor switching element (Q1) for a first current direction, and the second switching module (SM2) has a second controllable semiconductor switching element (Q2) for the opposite current direction,
wherein a first diode (D1), which is in the conducting state in the opposite current direction, is connected in parallel with the first semiconductor switching element (Q1) and a second diode (D2), which is in the conducting state in the first current direction, is connected in parallel with the second semiconductor switching element (Q2),
wherein a bridging semiconductor switching element (QU) is connected in parallel with the series circuit comprising the two switching modules (SM1, SM2),
**characterized**
**in that** the bridging semiconductor switching element (QU) is a thyristor which is arranged in such a manner that it can be switched to the conducting state if, for an exceptional case, the voltage on the DC voltage branch is higher than the voltage on the DC voltage bus, in order to facilitate a current flow from the DC voltage branch to the DC voltage bus, wherein a current sensor which can determine the level of the current and the current direction is provided, and wherein a voltage sensor which can determine the level of the voltage on the side of the DC voltage bus is provided, wherein a control device (SE1) is provided, which control device is connected to a control connection of the first semiconductor switching element (Q1) and second semiconductor switching element (Q2) and of the bridging semiconductor switching element (QU), specifically the gate connection, the voltage sensor and the current sensor, and is configured in such a manner
that, if a first threshold value of the voltage is undershot and if current flows in the exceptional case, the thyristor is switched to the conducting state.

2. Switching device (SCH3) for coupling a DC voltage branch (DCA1, DCA2, DCA3) to a DC voltage bus (DCB),
wherein the switching device (SCH3) has a parallel circuit comprising a third switching module (SM3) and a fourth switching module (SM4),
wherein the third switching module (SM3) has a series circuit comprising a third controllable semiconductor switching element (Q3) and a third diode (D3) for the first current direction, and the fourth switching module (SM4) has a series circuit comprising a fourth controllable semiconductor switching element (Q4) and a fourth diode (D4) for the opposite current direction,
wherein the third diode (D3) is in the blocking state in the opposite current direction and the fourth diode (D4) is in the blocking state in the first current direction,
wherein a bridging semiconductor switching element (QU) is connected in parallel with the parallel circuit comprising the third and fourth switching modules (SM3, SM4),
**characterized**
**in that** the bridging semiconductor switching element (QU) is a thyristor which is arranged in such a manner that it can be switched to the conducting state if, for an exceptional case, the voltage on the DC voltage branch is higher than the voltage on the DC voltage bus, in order to facilitate a current flow from the DC voltage branch to the DC voltage bus, wherein a current sensor which can determine the level of the current and the current direction is provided, and wherein a voltage sensor which can determine the level of the voltage on the side of the DC voltage bus is provided, wherein a control device (SE1) is provided, which control device is connected to a control connection of the third semiconductor switching element (Q3) and fourth semiconductor switching element (Q4) and of the bridging semiconductor switching element (QU), specifically the gate connection, the voltage sensor and the current sensor, and is configured in such a manner that, if a first threshold value of the voltage is undershot and if current flows in the exceptional case, the thyristor is switched to the conducting state.

3. Switching device (SCH1, SCH2) according to Patent Claim 1 or 2,
**characterized**
**in that** the first or/and second or third or/and fourth semiconductor switching element (Q1, Q2, Q3, Q4) is/are an insulated gate bipolar transistor, a metal oxide semiconductor field effect transistor, a gallium nitride transistor or a silicon carbide transistor.

4. Switching device (SCH1, SCH2) according to one of the preceding patent claims,
**characterized**
**in that** an isolating contact (TK1, TK3) is connected in series, in particular on the DC voltage branch side, with the series circuit comprising the first switching module (SM1) and the second switching module (SM2) and the parallel circuit comprising the third switching module (SM3) and the fourth switching module (SM4).

5. Switching device (SCH1, SCH2) according to one of the preceding patent claims,
**characterized**
**in that** the parallel circuit comprising the bridging semiconductor switching element (QU) has an interruption device (RK1), in particular a relay contact, in particular a normally closed contact.

6. Switching device (SCH1, SCH2) according to Patent Claim 4 or 5,
**characterized**
**in that** the isolating contact (TK1, TK3) or the interruption device (RK1) can be actuated by the control device (SE1), with the result that the current flow through the bridging semiconductor switching element (QU), in particular the thyristor, is resettable.

7. Switching device (SCH1, SCH2) according to one of the preceding patent claims,
**characterized**
**in that** the first threshold value of the voltage is between 10% and 50% of a nominal voltage of the DC voltage bus, in particular 30% of the nominal voltage of the DC voltage bus.

8. Switching device (SCH1, SCH2) according to one of the preceding patent claims,
**characterized**
**in that** the current sensor is a sensor based on the Hall effect.

9. Switching device (SCH1, SCH2) according to one of the preceding patent claims,
**characterized**
**in that**, in the series circuit comprising the first and second switching modules (SM1, SM2), the emitters or collectors and sources or drains of the first and second semiconductor switching elements in the form of transistors (Q1, Q2) are connected to one another;
**in that** the anode of the parallel diode is connected to the emitter or source and the cathode of the parallel diode is connected to the collector or drain.

10. Switching device (SCH1, SCH2) according to one of the preceding patent claims,
**characterized**
**in that** the control device (SE1) is configured in such a manner that, if a first threshold value of the current is exceeded, in particular if current flows counter to the exceptional case, the current flow is interrupted by at least one switching module, in particular both switching modules.

## Revendications

1. Dispositif de commutation (SCH1, SCH2) pour le couplage d'une branche à tension continue (DCA1, DCA2, DCA3) à un bus de tension continue (DCB),
le dispositif de commutation (SCH1, SCH2) comprenant un montage en série d'un premier module de commutation (SM1) et d'un deuxième module de commutation (SM2),
dans lequel le premier module de commutation (SM1) comprend pour un premier sens du courant un premier élément de commutation à semiconducteur (Q1) pouvant être commandé et le deuxième module de commutation (SM2) comprend pour le sens du courant opposé un deuxième élément de commutation à semiconducteur (Q2) pouvant être commandé,
dans lequel une première diode (D1) qui est conductrice dans le sens du courant opposé est connectée en parallèle au premier élément de commutation à semiconducteur (Q1), et une deuxième diode (D2) qui est conductrice dans le premier sens du courant est connectée en parallèle au deuxième élément de commutation à semiconducteur (Q2),
dans lequel un élément de commutation à semiconducteur pontant (QU) est connecté en parallèle au montage en série des deux modules de commutation (SM1, SM2),
**caractérisé**
**en ce que** l'élément de commutation à semiconducteur pontant (QU) est un thyristor qui est disposé de telle sorte qu'il puisse être connecté de manière conductrice lorsque, pour un cas exceptionnel, la tension sur la branche à tension continue est supérieure à la tension sur le bus de tension continue, afin de soutenir un flux de courant allant de la branche à tension continue au bus de tension continue, dans lequel il est prévu un capteur de courant qui peut déterminer l'amplitude du courant et le sens du courant et dans lequel il est prévu un capteur de tension qui peut déterminer l'amplitude de la tension sur les côtés du bus de tension continue, dans lequel il est prévu un dispositif de commande (SE1) qui est relié à une borne de commande du premier élément de commutation à semiconducteur (Q1) et du deuxième élément de commutation à semiconducteur (Q2) ainsi que de l'élément de commutation à semiconducteur pontant (QU), et notamment à la borne de grille, au capteur de tension et au capteur de courant, et qui est configuré de telle sorte que le thyristor soit connecté de manière conductrice lorsque la tension passe au-dessous d'une première valeur de seuil et dans le cas d'un flux de courant du cas exceptionnel.

2. Dispositif de commutation (SCH3) pour le couplage d'une branche à tension continue (DCA1, DCA2, DCA3) à un bus de tension continue (DCB),
le dispositif de commutation (SCH3) comprenant un montage en parallèle d'un troisième module de commutation (SM3) et d'un quatrième module de commutation (SM4),
dans lequel le troisième module de commutation (SM3) comprend pour le premier sens du courant un montage en série d'un troisième élément de commutation à semiconducteur (Q3) pouvant être commandé et d'une troisième diode (D3) et le quatrième module de commutation (SM4) comprend pour le sens du courant opposé un montage en série d'un quatrième élément de commutation à semiconducteur (Q4) pouvant être commandé et d'une quatrième diode (D4),
dans lequel la troisième diode (D3) est bloquante dans le sens du courant opposé et la quatrième diode (D4) est bloquante dans le premier sens du courant,
dans lequel un élément de commutation à semiconducteur pontant (QU) est connecté en parallèle au montage en parallèle du troisième et du quatrième module de commutation (SM3, SM4),
**caractérisé**
**en ce que** l'élément de commutation à semiconducteur pontant (QU) est un thyristor qui est disposé de telle sorte qu'il puisse être connecté de manière conductrice lorsque, pour un cas exceptionnel, la tension sur la branche à tension continue est supérieure à la tension sur le bus de tension continue, afin de soutenir un flux de courant allant de la branche à tension continue au bus de tension continue, dans lequel il est prévu un capteur de courant qui peut déterminer l'amplitude du courant et le sens du courant et dans lequel il est prévu un capteur de tension qui peut déterminer l'amplitude de la tension sur les côtés du bus de tension continue, dans lequel il est prévu un dispositif de commande (SE1) qui est relié à une borne de commande du troisième élément de commutation à semiconducteur (Q3) et du quatrième élément de commutation à semiconducteur (Q4) ainsi que de l'élément de commutation à semiconducteur pontant (QU), et notamment à la borne de grille, au capteur de tension et au capteur de courant, et qui est configuré de telle sorte que le thyristor soit connecté de manière conductrice lorsque la tension passe au-dessous d'une première valeur de seuil et dans le cas d'un flux de courant du cas exceptionnel.

3. Dispositif de commutation (SCH1, SCH2) selon la revendication 1 ou la revendication 2,
**caractérisé**
**en ce que** le premier ou/et le deuxième élément de commutation à semiconducteur ou bien le troisième ou/et le quatrième élément de commutation à semiconducteur (Q1, Q2, Q3, Q4) sont un transistor bipolaire avec une électrode de grille isolée, un transistor à effet de champ à semiconducteur à oxyde métallique, un transistor en nitrure de gallium ou un transistor en carbure de silicium.

4. Dispositif de commutation (SCH1, SCH2) selon l'une des revendications précédentes,
**caractérisé**
**en ce qu'**un contact de coupure (TK1, TK3) est connecté en série au montage en série du premier module de commutation (SM1) et du deuxième module de commutation (SM2) ou bien au montage en parallèle du troisième module de commutation (SM3) et du quatrième module de commutation (SM4), en particulier du côté branche à tension continue.

5. Dispositif de commutation (SCH1, SCH2) selon l'une des revendications précédentes,
**caractérisé**
**en ce que** le montage en parallèle de l'élément de commutation à semiconducteur pontant (QU) comprend un dispositif d'interruption (RK1), en particulier un contact de relais, en particulier un contact normalement fermé.

6. Dispositif de commutation (SCH1, SCH2) selon la revendication 4 ou la revendication 5,
**caractérisé**
**en ce que** le contact de coupure (TK1, TK3) ou le dispositif d'interruption (RK1) est actionnable par le biais du dispositif de commande (SE1), de sorte que le flux de courant peut être réinitialisé par le biais de l'élément de commutation à semiconducteur pontant (QU), en particulier du thyristor.

7. Dispositif de commutation (SCH1, SCH2) selon l'une des revendications précédentes,
**caractérisé**
**en ce que** la première valeur de seuil de la tension est comprise entre 10 % et 50 % d'une tension nominale du bus de tension continue, en particulier s'élève à 30 % de la tension nominale du bus de tension continue.

8. Dispositif de commutation (SCH1, SCH2) selon l'une des revendications précédentes,
**caractérisé**
**en ce que** le capteur de courant est un capteur basé sur l'effet Hall.

9. Dispositif de commutation (SCH1, SCH2) selon l'une des revendications précédentes,
**caractérisé**
**en ce que**, dans le cas du montage en série du premier et du deuxième module de commutation (SM1, SM2), les émetteurs ou collecteurs ou bien les sources ou drains des premier et deuxième éléments de commutation à semiconducteur sont reliés les uns aux autres sous forme de transistors (Q1, Q2) ;
**en ce que** l'anode de la diode parallèle est reliée à l'émetteur ou bien la source et la cathode de la diode parallèle est reliée au collecteur ou bien drain.

10. Dispositif de commutation (SCH1, SCH2) selon l'une des revendications précédentes,
**caractérisé**
**en ce que** le dispositif de commande (SE1) est configuré de telle sorte que, lorsque le courant passe au-dessus d'une première valeur de seuil, en particulier dans le cas d'un flux de courant contraire au cas exceptionnel, il s'effectue une interruption du flux de courant par le biais d'au moins un module de commutation, en particulier des deux modules de commutation.
